# EUROPÄISCHE PATENTSCHRIFT

(11) **EP 1 821 505 B1**
(45) Veröffentlichungstag und Bekanntmachung des Hinweises auf die Patenterteilung: **30.09.2009**
(21) Anmeldenummer: 07102342.8
(22) Anmeldetag: 14.02.2007
(51) Int. Cl.: H04M 1/725

(54) **Verfahren, Vorrichtung und Computerprogrammprodukt für die bewegungsabhängige Signalisierung eines Ereignisses**
Method, device and computer program product for motion dependent signalling of an event
Procédé, dispositif mobile et produit de programme informatique pour la signalisation d'un événement dépendant d'un déplacement

(30) Priorität: 15.02.2006 DE 102006007061
(43) Veröffentlichungstag der Anmeldung: 22.08.2007
(60) Teilanmeldung: 09010407.6
(73) Patentinhaber: Palm, Inc., Sunnyvale, CA 94085-2801 (US)
(72) Erfinder: Lechner, Sami, 69214, Eppelheim (DE)
(74) Vertreter: Samson & Partner

(56) Entgegenhaltungen:
- EP-A2- 1 063 837
- WO-A-20/05071932
- DE-A1- 10 228 608
- US-A1- 2004 127 198
- US-B1- 6 310 955

## Beschreibung

Die Erfindung betrifft ein Verfahren zum Signalisieren eines Ereignisses, eine entsprechende mobile Vorrichtung und ein entsprechendes Computerprogrammprodukt.

Eine mobile Vorrichtung ist beispielsweise ein Mobiltelefon, ein persönlicher digitaler Assistent, kurz: PDA, oder ein Notebook-PC. Diese signalisieren Ereignisse, z.B. einen Telefonanruf, ein Eintreffen einer Nachricht oder einen Termin optisch, akustisch oder durch Vibration. Reagiert ein Nutzer der mobilen Vorrichtung nicht auf die Signalisierung, dann wird das verpasste Ereignis z.B. optisch als ein Symbol in einer Anzeigeeinheit der mobilen Vorrichtung dargestellt.

EP 1 063 837 A2 offenbart eine mobile Kommunikationsvorrichtung, deren Betriebszustand abhängig von ihrer Bewegung gesteuert werden kann.

DE 102 28 608 A1 offenbart ein Mobiltelefon mit Alarmsystem, bei dem, wenn eine nicht autorisierte Bewegung des Mobiltelefons mittels eines Bewegungssensors detektiert wird, ein Alarm ausgelöst wird.

WO 2005/071932 A1 offenbart ein Mobiltelefon, bei dem in Abhängigkeit einer Bewegung des Mobiltelefons dessen Anrufsignalisierung automatisch deaktiviert wird.

US 2004/0127198 A1 offenbart eine mobile Kommunikationsvorrichtung, deren Signalisierungsart eines eingehenden Anrufs, Text- oder Sprachnachricht etc. abhängig von einer Bewegung der Kommunikationsvorrichtung automatisch eingestellt wird.

Die Aufgabe der Erfindung ist, ein Verfahren, eine entsprechende mobile Vorrichtung und ein entsprechendes Computerprogrammprodukt zu schaffen, durch das bzw. durch die ein zuverlässiges Signalisieren eines Ereignisses einem Nutzer der mobilen Vorrichtung gegenüber ermöglicht wird.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren, eine entsprechende mobile Vorrichtung und ein entsprechendes Computerprogrammprodukt zum Signalisieren eines Ereignisses durch die mobile Vorrichtung. Das Ereignis wird abhängig von einem Bewegungssignal, das eine Bewegung der mobilen Vorrichtung repräsentiert, an einen Nutzer der mobilen Vorrichtung signalisiert. Das Ereignis selbst und das Auftreten des Ereignisses sind unabhängig von dem Bewegungssignal. Der Vorteil ist, dass das Ereignis dann signalisiert wird, wenn die Wahrscheinlichkeit besonders groß ist, dass der Nutzer die Signalisierung wahrnimmt. Das Bewegungssignal ist besonders gut geeignet, einen geeigneten Zeitpunkt für das Signalisieren des Ereignisses zu ermitteln. Das Ereignis kann dem Nutzer so besonders zuverlässig signalisiert werden. Durch das Berücksichtigen des Bewegungssignals kann eine Anzahl erfolgloser Signalisierungsvorgänge verringert werden und entsprechend Energie eingespart werden.

In einer vorteilhaften Ausgestaltung erfolgt das Signalisieren des Ereignisses, wenn abhängig von dem Bewegungssignal ein Beginn oder ein Ende einer Bewegung erkannt wird. Dies beruht auf der Erkenntnis, dass beispielsweise während einer Bewegung des Nutzers, z.B. beim Gehen, das Signalisieren des Ereignisses von dem Nutzer oft nicht wahrgenommen wird. Doch ist die Wahrscheinlichkeit hoch, dass der Nutzer sich in der Nähe der mobilen Vorrichtung befindet, wenn die mobile Vorrichtung bewegt wird. Bei dem Ende der Bewegung, z.B. beim Stehen bleiben, kann der Nutzer daher mit hoher Wahrscheinlichkeit die Signalisierung des Ereignisses wahrnehmen. Ferner ist die Wahrscheinlichkeit hoch, dass der Nutzer sich nicht in der Nähe der mobilen Vorrichtung aufhält und die Signalisierung somit nicht wahrnehmen kann, wenn die mobile Vorrichtung nicht bewegt wird, z.B. weil sie liegen gelassen wurde. Bei dem Beginn der Bewegung ist die Wahrscheinlichkeit jedoch hoch, dass der Nutzer sich wieder in der Nähe der mobilen Vorrichtung aufhält und das Signalisieren des Ereignisses wahrnehmen kann, z.B. weil der Nutzer die mobile Vorrichtung gerade wieder in die Hand genommen hat. Das Signalisieren des Ereignisses kann so besonders zuverlässig erfolgen und die Anzahl erfolgloser Signalisierungsvorgänge wird dadurch reduziert.

In diesem Zusammenhang ist es vorteilhaft, wenn der Beginn der Bewegung erkannt wird, wenn das Bewegungssignal einen ersten Schwellenwert überschreitet. Dies hat den Vorteil, dass dadurch nur solche Bewegungen für den Beginn der Bewegung berücksichtigt werden, für die die Wahrscheinlichkeit groß ist, dass der Nutzer sich in der Nähe der mobilen Vorrichtung aufhält und die Signalisierung des Ereignisses wahrnehmen kann.

In diesem Zusammenhang ist es weiter vorteilhaft, wenn das Ende der Bewegung erkannt wird, wenn das Bewegungssignal einen zweiten Schwellenwert unterschreitet. Dies hat den Vorteil, dass Schwankungen der Bewegungsintensität unberücksichtigt bleiben und das Signalisieren des Ereignisses nur dann erfolgt, wenn die Bewegung so gering ist, dass die Wahrscheinlichkeit groß ist, dass der Nutzer die Signalisierung des Ereignisses wahrnehmen kann.

In diesem Zusammenhang ist es vorteilhaft, wenn das Ende der Bewegung erst dann erkannt wird, wenn das Bewegungssignal den zweiten Schwellenwert für mindestens eine vorgegebene Zeitdauer unterschreitet. Dadurch wird gewährleistet, dass kurze Unterbrechungen der Bewegung, z.B. bis etwa eine Sekunde, für das Signalisieren des Ereignisses unberücksichtigt bleiben, da die Wahrscheinlichkeit gering ist, dass der Nutzer das Signalisieren des Ereignisses wahrnehmen würde.

In einer weiteren vorteilhaften Ausgestaltung umfasst das Ereignis einen Telefonanruf, eine Sprach-, Text- oder Bildnachricht oder einen Termin. Dies hat den Vorteil, dass für den Nutzer relevante Ereignisse signalisiert werden und diesem durch das Signalisieren zur Kenntnis gebracht werden können. So erfordert beispielsweise ein verpasster Telefonanruf gegebenenfalls einen Rückruf oder eine noch nicht gelesene Textnachricht gegebenenfalls eine Antwort. Ferner wird der Nutzer durch das Signalisieren an den Termin erinnert, wenn der Nutzer diesen zuvor noch nicht zur Kenntnis genommen und gegebenenfalls die Kenntnisnahme der mobilen Vorrichtung bestätigt hat.

In einer weiteren vorteilhaften Ausgestaltung ist die mobile Vorrichtung als ein Mobiltelefon, ein persönlicher digitaler Assistent oder als ein Notebook-PC ausgebildet. Der Vorteil ist, dass die mobile Vorrichtung, die der Nutzer zum Kommunizieren oder zum Verwalten von Terminen nutzt, kommunikationsbezogene oder terminbezogene Ereignisse zuverlässig signalisiert.

Ausführungsbeispiele der Erfindung sind im Folgenden anhand der schematischen Zeichnungen erläutert. Es zeigen:
Figur 1 eine mobile Vorrichtung,
Figur 2 ein zeitlicher Verlauf eines Bewegungssignals und einer Signalisierung und
Figur 3 ein Ablaufdiagramm.

Elemente gleicher Konstruktion oder Funktion sind figurenübergreifend mit den gleichen Bezugszeichen versehen.

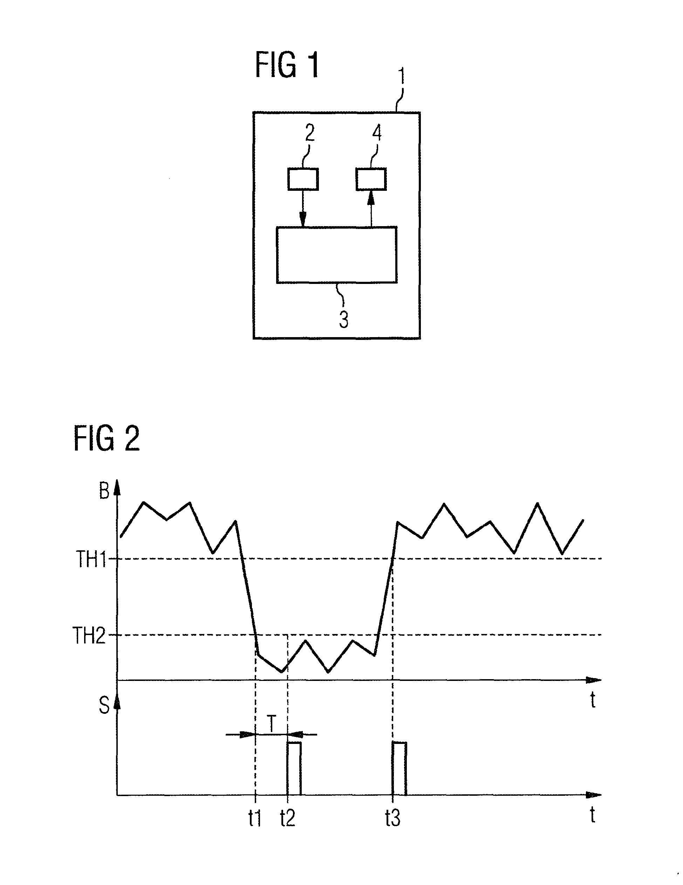

Eine mobile Vorrichtung 1 umfasst einen Bewegungssensor 2, eine Steuereinrichtung 3 und eine Signalisierungseinrichtung 4 (Figur 1). Die mobile Vorrichtung 1 ist beispielsweise als ein Mobiltelefon, als ein persönlicher digitaler Assistent oder als ein Notebook-PC oder als eine andere mobile Vorrichtung ausgebildet. Insbesondere ist die mobile Vorrichtung 1 ausgebildet zum Kommunizieren, d.h. beispielsweise zum Telefonieren und/oder zum Empfangen von Nachrichten, z.B. von Short Message Service Nachrichten oder von E-Mail, oder zum Verwalten von Terminen. Die Signalisierungseinrichtung 4 ist beispielsweise ausgebildet zum optischen und/oder akustischen Signalisieren und/oder zum Signalisieren durch Vibration.

Der Bewegungssensor 2 wird genutzt, um ein Bewegen der mobilen Vorrichtung 1 zu erfassen. Ein Bewegungssignal B des Bewegungssensors 2 wird der Steuereinrichtung 3 zugeführt. Das Bewegungssignal B repräsentiert die Bewegung der mobilen Vorrichtung 1. Die Steuereinrichtung 3 ist ausgebildet zum Auswerten des Bewegungssignals B und zum Ansteuern der Signalisierungseinrichtung 4 abhängig von dem Bewegungssignal B.

Der Bewegungssensor 2 ist beispielsweise so ausgebildet, dass eine Bewegung der mobilen Vorrichtung 1 mechanisch erfasst wird, z.B. durch Erfassen einer Beschleunigung oder durch Erfassen einer Lage der mobilen Vorrichtung 1 im Raum. Der Bewegungssensor 2 kann jedoch auch z.B. so ausgebildet sein, dass die Bewegung der mobilen Vorrichtung 1 abhängig von einer Veränderung einer empfangenen Signalstärke erfasst wird. Dazu kann vorgesehen sein, durch den Bewegungssensor 2 in der mobilen Vorrichtung 1 die Signalstärke von Signalen auszuwerten, die von mindestens einer Basisstation gesendet und durch die mobile Vorrichtung 1 empfangen wurden. Dazu kann der Bewegungssensor 2 auch als Programmfunktion ausgebildet sein, die bevorzugt in der Steuereinheit 3 ausgeführt wird.

Alternativ oder zusätzlich kann auch mindestens eine Basisstation die Signalstärke eines von der mobilen Vorrichtung 1 gesendeten Signals erfassen. Die mindestens eine Basisstation sendet dann z.B. eine Information über die jeweils empfangene Signalstärke oder die Veränderung der empfangenen Signalstärke an die mobile Vorrichtung 1. Die mobile Vorrichtung 1 ist dann ausgebildet, diese Information zu empfangen und auszuwerten und das Bewegungssignal B abhängig von der empfangenen Information zu erzeugen. Der Bewegungssensor 2 kann dazu als Programmfunktion ausgebildet sein, die bevorzugt in der Steuereinheit 3 ausgeführt wird. Die mindestens eine Basisstation kann jedoch auch die empfangene Signalstärke oder die Veränderung der empfangenen Signalstärke auswerten, daraus das Bewegungssignal B erzeugen und dieses an die mobile Vorrichtung 1 senden. Die mobile Vorrichtung 1 ist dann ausgebildet, das Bewegungssignal B von der mindestens einen Basisstation zu empfangen. Der Bewegungssensor 2 muss dann nicht in der mobilen Vorrichtung 1 vorgesehen sein. Das Bewegungssignal B kann jedoch auch auf andere Weise erzeugt und/oder der mobilen Vorrichtung 1 zugeführt werden.

Die Steuereinrichtung 3 ist ferner ausgebildet zum Erkennen von Telefonanrufen, des Eintreffens von Text-, Sprach- oder Bildnachrichten und/oder zum Erkennen des Vorliegens eines Termins. Die Steuereinrichtung 3 kann ferner ausgebildet sein zum Steuern der Kommunikation oder zum Verwalten von Terminen.

Ein Ereignis E ist beispielsweise ein Telefonanruf, das Eintreffen einer Text-, Sprach- oder Bildnachricht oder ein Termin. Bei dem Auftreten des Ereignisses E wird die Signalisierungseinrichtung 4 angesteuert zum Signalisieren des Ereignisses E. Falls der Nutzer nicht auf das Signalisieren des Ereignisses E reagiert, z.B. indem der Nutzer den Telefonanruf annimmt, die Text-, Sprach- oder Bildnachricht abruft oder den Termin bestätigt, z.B. durch einen Tastendruck an der mobilen Vorrichtung 1 oder ähnliches, dann wird das Auftreten des Ereignisses E gespeichert für ein erneutes Signalisieren zu einem geeigneten späteren Zeitpunkt.

Der geeignete spätere Zeitpunkt wird abhängig von dem Bewegungssignal B vorgegeben. Besonders geeignet für das Signalisieren des Ereignisses E ist ein Zeitraum bald nach einem Beginn der Bewegung oder bald nach einem Ende der Bewegung der mobilen Vorrichtung 1, insbesondere unmittelbar nach einem Erkennen des Beginns der Bewegung oder unmittelbar oder bis zu wenigen Sekunden nach dem Erkennen des Endes der Bewegung.

Figur 2 zeigt einen zeitlichen Verlauf des Bewegungssignals B und einer Signalisierung S, die abhängig von dem Verlauf des Bewegungssignals B erfolgt und die das Auftreten des Ereignisses E signalisiert. Zeitlich vor einem ersten Zeitpunkt t1 weist das Bewegungssignal B einen hohen Wert oberhalb eines vorgegebenen Schwellenwerts TH1 auf, der eine intensive Bewegung der mobilen Vorrichtung 1 repräsentiert. So lange diese intensive Bewegung anhält, ist die Wahrscheinlichkeit gering, dass der Nutzer der mobilen Vorrichtung 1 das Signalisieren des Ereignisses E wahrnimmt. Beispielsweise hat der Nutzer ein Mobiltelefon als mobile Vorrichtung 1 in einer Tasche und bewegt sich mit dieser z.B. gehend, laufend, Fahrrad fahrend oder tanzend. Die intensive Bewegung kann jedoch z.B. auch durch Erschütterungen ausgelöst sein, wie sie z.B. bei einer Fahrt über Kopfsteinpflaster oder ähnliches entstehen.

Zu dem ersten Zeitpunkt t1 fällt das Bewegungssignal B unter einen vorgegebenen zweiten Schwellenwert TH2. Bleibt das Bewegungssignal B von dem ersten Zeitpunkt t1 ab für mindestens eine vorgegebene Zeitdauer T bis zu einem zweiten Zeitpunkt t2 unterhalb dem vorgegebenen zweiten Schwellenwert TH2, dann wird das Ende der Bewegung der mobilen Vorrichtung 1 erkannt. Die vorgegebene Zeitdauer T beträgt beispielsweise etwa ein bis zwei Sekunden, kann jedoch auch kürzer oder länger sein. Insbesondere kann die vorgegebene Zeitdauer T auch gleich Null sein. Bei dem Ende der Bewegung der mobilen Vorrichtung 1 ist die Wahrscheinlichkeit hoch, dass der Nutzer das Signalisieren des Ereignisses E wahrnehmen kann. Beispielsweise ist der Nutzer mit der mobilen Vorrichtung 1 stehen geblieben oder hat die mobile Vorrichtung 1 gerade abgelegt oder abgestellt, z.B. auf einen Tisch. Dadurch ist es besonders einfach, die Aufmerksamkeit des Nutzers durch die Signalisierung S auf die mobile Vorrichtung 1 und das signalisierte Ereignis E zu lenken. Dadurch ist das Signalisieren des Ereignisses E mit hoher Wahrscheinlichkeit erfolgreich, d.h. der Nutzer nimmt die Signalisierung S wahr und reagiert darauf, z.B. durch Drücken einer Taste an der mobilen Vorrichtung 1 oder ähnliches. Hat der Nutzer entsprechend reagiert, dann braucht im Allgemeinen das Signalisieren des Ereignisses E nicht mehr wiederholt werden. Andernfalls kann die Signalisierung S zu einem weiteren geeigneten späteren Zeitpunkt erneut durchgeführt werden.

Zu einem dritten Zeitpunkt t3 überschreitet das Bewegungssignal B den vorgegebenen ersten Schwellenwert TH1. Die Signalisierung S erfolgt vorteilhafterweise unmittelbar nach dem dritten Zeitpunkt t3. Der Beginn der Bewegung ist beispielsweise verursacht durch das Aufnehmen der zuvor abgelegten oder abgestellten mobilen Vorrichtung 1. Dadurch ist es besonders einfach, die Aufmerksamkeit des Nutzers durch die Signalisierung S auf die mobile Vorrichtung 1 und das signalisierte Ereignis E zu lenken. Dadurch ist das Signalisieren des Ereignisses E mit hoher Wahrscheinlichkeit erfolgreich.

Der vorgegebene erste Schwellenwert TH1 ist vorzugsweise so vorgegeben, dass die Bewegung der mobilen Vorrichtung 1, z.B. durch Aufnehmen und/oder Mitführen der mobilen Vorrichtung 1 zuverlässig überschritten wird, z.B. beim Gehen oder Fahrrad fahren oder beim Herausnehmen der mobilen Vorrichtung 1 aus einer Tasche oder ähnliches. Jedoch ist es vorteilhaft, den vorgegebenen ersten Schwellenwert TH1 so vorzugeben, dass das Bewegungssignal B bei leichten Vibrationen den vorgegebenen ersten Schwellenwert TH1 nicht überschreitet, z.B. bei einer Autofahrt über glatten Asphalt oder bei einer Zugfahrt. Für den vorgegebenen zweiten Schwellenwert TH2 gelten die Ausführungen für den vorgegebenen ersten Schwellenwert TH1 entsprechend. Der vorgegebene zweite Schwellenwert TH2 ist vorzugsweise kleiner oder gleich dem vorgegebenen ersten Schwellenwert TH1.

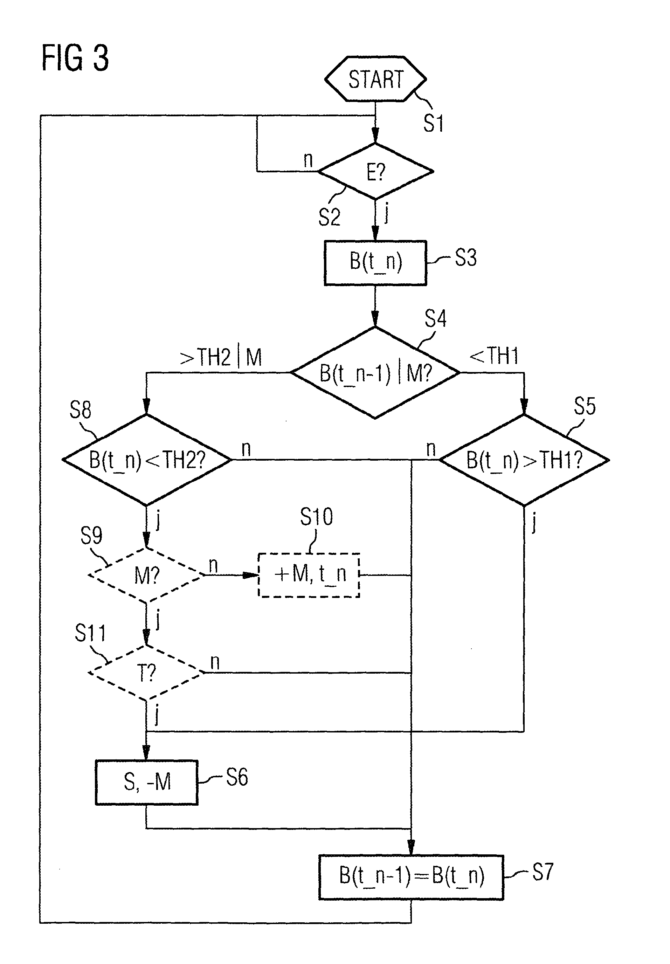

Figur 3 zeigt ein Ablaufdiagramm eines Programms, das vorzugsweise in der Steuereinrichtung 3 ausführbar ist. Das Programm beginnt in einem Schritt S1. In einem Schritt S2 wird überprüft, ob mindestens ein Ereignis E zum Signalisieren vorliegt. Ist dies nicht der Fall, dann wird der Schritt S2 vorzugsweise nach einer vorgegebenen Wartezeitdauer TW wiederholt. Die vorgegebene Wartezeitdauer TW entspricht beispielsweise einer Taktzeitdauer, die für das Überprüfen des Vorliegens mindestens eines Ereignisses E vorgesehen ist. Alternativ kann auch vorgesehen sein, den Schritt S1 immer dann auszuführen, wenn mindestens ein Ereignis E zum Signalisieren vorliegt. Der Schritt S2 ist dann gegebenenfalls nicht erforderlich.

In einem Schritt S3 wird ein Wert des Bewegungssignals B zu einem aktuellen Zeitpunkt t_N erfasst. In einem Schritt S4 wird überprüft, ob der Wert des Bewegungssignals B zu einem vorangegangenen Zeitpunkt t_N-1 kleiner ist als der vorgegebene erste Schwellenwert TH1 oder größer ist als der vorgegebene zweite Schwellenwert TH2. Ferner wird in dem Schritt S4 überprüft, ob ein Merker M gesetzt ist. Ist der Wert des Bewegungssignals B zu dem vorangegangenen Zeitpunkt t_N-1 kleiner als der vorgegebene erste Schwellenwert TH1, dann wird in einem Schritt S5 überprüft, ob der Wert des Bewegungssignals zu dem aktuellen Zeitpunkt t_N größer ist als der vorgegebene erste Schwellenwert TH1. Ist diese Bedingung erfüllt, dann wird in einem Schritt S6 die Signalisierung S durchgeführt und in einem Schritt S7 der Wert des Bewegungssignals B zu dem aktuellen Zeitpunkt t_N dem Wert des Bewegungssignals B zu dem vorangegangenen Zeitpunkt t_N-1 zugewiesen und gespeichert. Das Programm kann dann in dem Schritt S2 fortgeführt werden. Ist die Bedingung in dem Schritt S5 nicht erfüllt, d.h. der Wert des Bewegungssignals B zu dem aktuellen Zeitpunkt t_N ist kleiner oder gleich dem vorgegebenen ersten Schwellenwert TH1, dann wird das Programm in dem Schritt S7 fortgeführt.

Ist der Wert des Bewegungssignals B zu dem vorangegangenen Zeitpunkt t_N-1 in dem Schritt S4 größer als der vorgegebene zweite Schwellenwert TH2 oder ist der Merker M gesetzt, dann wird in einem Schritt S8 überprüft, ob der Wert des Bewegungssignals B zu dem aktuellen Zeitpunkt t_N kleiner ist als der vorgegebene zweite Schwellenwert TH2. Ist diese Bedingung nicht erfüllt, dann wird das Programm in dem Schritt S7 fortgeführt. Ist die Bedingung jedoch erfüllt, dann wird in einem Schritt S9 überprüft, ob der Merker M gesetzt ist. Ist der Merker M noch nicht gesetzt, dann wird in einem Schritt S10 der Merker M gesetzt und der aktuelle Zeitpunkt t_N gespeichert und das Programm in dem Schritt S7 fortgeführt. Ist der Merker M in dem Schritt S9 jedoch bereits gesetzt, dann wird in einem Schritt S11 überprüft, ob seit dem Setzen des Merkers M zu dem in dem Schritt S10 gespeicherten aktuellen Zeitpunkt t_N die vorgegebene Zeitdauer T verstrichen ist. Ist diese Bedingung erfüllt, dann wird in dem Schritt S6 die Signalisierung S durchgeführt und der Merker M gelöscht. Das Programm wird in dem Schritt S7 fortgeführt. Das Programm wird ferner in dem Schritt S7 fortgeführt, wenn die Bedingung in dem Schritt S11 nicht erfüllt ist, d.h. wenn die vorgegebene Zeitdauer T noch nicht verstrichen ist. Vorzugsweise wird das mindestens eine Ereignis E gelöscht, wenn der Nutzer dieses zur Kenntnis genommen hat und entsprechend reagiert hat, z.B. durch Bestätigung der Kenntnisnahme durch Tastendruck.

Das Programm kann in Form von Hardware in der mobilen Vorrichtung 1 oder insbesondere in der Steuereinrichtung 3 implementiert sein. Das Programm kann jedoch auch in Form eines Computerprogramms implementiert sein, das Programmanweisungen umfasst, die durch einen Computer ausführbar sind. Die mobile Vorrichtung 1 oder insbesondere die Steuereinrichtung 3 können dann einen solchen Computer umfassen, der die Programmanweisungen des Computerprogramms ausführt. Die Steuereinrichtung 3 kann auch als ein solcher Computer ausgebildet sein. Das Computerprogramm kann z.B. auch Teil eines Betriebssystems des Computers sein. Das Computerprogramm kann auch in Form eines Computerprogrammprodukts vorliegen, das ein computerlesbares Medium mit den Programmanweisungen umfasst. Das computerlesbare Medium ist beispielsweise eine CD-ROM, eine Flash-Speicherkarte, eine Festplatte oder ein anderes geeignetes computerlesbares Medium.

## Patentansprüche

1. Verfahren zum Signalisieren eines Ereignisses (E) durch eine mobile Vorrichtung (1), bei dem das Ereignis (E) abhängig von einem Bewegungssignal (B), das eine Bewegung der mobilen Vorrichtung (1) repräsentiert, einem Nutzer der mobilen Vorrichtung (1) signalisiert wird, bei dem das Ereignis (E) einen Telefonanruf, eine Sprach- oder Textnachricht oder einen Termin umfasst, **dadurch gekennzeichnet, dass** das Signalisieren des Ereignisses (E) erfolgt, wenn abhängig von dem Bewegungssignal (B) ein Beginn oder ein Ende einer Bewegung erkannt wird.

2. Verfahren nach Anspruch 1, bei dem der Beginn der Bewegung erkannt wird, wenn das Bewegungssignal (B) einen ersten Schwellenwert (TH1) überschreitet.

3. Verfahren nach Anspruch 1 oder 2, bei dem das Ende der Bewegung erkannt wird, wenn das Bewegungssignal (B) einen zweiten Schwellenwert (TH2) unterschreitet.

4. Verfahren nach Anspruch 3, bei dem das Ende der Bewegung erst dann erkannt wird, wenn das Bewegungssignal (B) den zweiten Schwellenwert (TH2) für mindestens eine vorgegebene Zeitdauer (T) unterschreitet.

5. Verfahren nach einem der vorstehenden Ansprüche, bei dem das Ereignis (E) bei seinem Auftreten signalisiert wird und, wenn auf diese Signalisierung keine Reaktion eines Benutzers der mobilen Vorrichtung (1) erkannt wird, das Auftreten des Ereignisses (E) gespeichert wird und das Ereignis (E) erneut signalisiert wird, wenn abhängig von dem Bewegungssignal (B) ein Beginn oder ein Ende einer Bewegung erkannt wird.

6. Mobile Vorrichtung, die ausgebildet ist, ein Ereignis (E) einem Nutzer der mobilen Vorrichtung abhängig von einem Bewegungssignal (B) zu signalisieren, das eine Bewegung der mobilen Vorrichtung (1) repräsentiert, wobei das Ereignis (E) einen Telefonanruf, eine Sprach- oder Textnachricht oder einen Termin umfasst, **dadurch gekennzeichnet, dass** die mobile Vorrichtung ausgebildet ist, das Ereignis (E) zu signalisieren, wenn das Bewegungssignal (B) den Beginn oder das Ende der Bewegung angibt.

7. Mobile Vorrichtung nach Anspruch 6, die als ein Mobiltelefon, ein persönlicher digitaler Assistent oder als ein Notebook-PC ausgebildet ist.

8. Computerprogrammprodukt, das ein computerlesbares Medium mit Programmanweisungen umfasst, die durch einen Computer ausführbar sind und die ausgebildet sind, abhängig von einem Bewegungssignal (B), das eine Bewegung einer mobilen Vorrichtung (1) repräsentiert, einem Nutzer der mobilen Vorrichtung (1) ein Ereignis (E) durch die mobile Vorrichtung (1) zu signalisieren, wobei das Ereignis (E) einen Telefonanruf, eine Sprach- oder Textnachricht oder einen Termin umfasst, **dadurch gekennzeichnet, dass** die Programmanweisungen ausgebildet sind, das Ereignis (E) zu signalisieren, wenn abhängig von dem Bewegungssignal (B) ein Beginn oder ein Ende einer Bewegung erkannt wird.

## Claims

1. Method for signaling an event (E) by means of a mobile device (1), wherein the event (E) is signaled to a user in dependence from a movement signal (B), which represents a movement of the mobile device (1), wherein the event (E) comprises a telephone call, a voice or text message or a date/appointment, **characterized in that** the signaling of the event (E) is performed in the case a begin or an end of a movement is detected in dependence from the movement signal (B).

2. Method of claim 1, wherein the being of the movement is detected in the case the movement signal (B) exceeds a first threshold value (CH1).

3. Method of claim 1 or 2, wherein the end of the movement is detected in the case the movement signal (B) falls below a second threshold value (TR2).

4. Method of claim 3,wherein the end of the movement is only detected in the case the movement signal (B) falls below the second threshold value (TH2) for at least a predefined period of time (T).

5. Method of one of the preceding claims, wherein the event (E) is signaled upon its occurrence and, if in response to this signaling no reaction of a user of the mobile device (1) is detected, the occurrence of the event (E) is stored and the event (E) is signaled again in the case a begin or an end of a movement is detected in dependence from the movement signal (B).

6. Mobile device, being adapted to signal an event (E) to a user of the mobile device in dependence from a movement signal (B), which represents a movement of the mobile device (1), wherein the event (E) comprises a telephone call, a voice or text message, a date/appointment, **characterized in that** the mobile device is adapted to signal the event (E) in the case the movement signal (B) indicates the begin or the end of the movement.

7. Mobile device of claim 6, is a mobile telephone, personal digital assistant or notebook PC.

8. Computer program product, which comprises a computer-readable medium comprising program instructions, which can be executed by a computer and which are adapted to signal an event (E) of a mobile device (1) in dependence from a movement signal (B), which represents a movement of the mobile device (1), wherein the event (E) comprises a telephone call, a voice or a text message or a date/appointment, **characterized in that** the program instructions are adapted to signal the event in the case a begin or an end of a movement is detected in dependence from the movement signal (B).

## Revendications

1. Procédé pour la signalisation d'un événement (E) par un dispositif mobile (1), dans lequel l'événement (E) est signalisé à un utilisateur du dispositif mobile (1) en fonction d'un signal de déplacement (B) représentant un déplacement du dispositif mobile (1), l'événement (E) comprenant un coup de téléphone, un message de langue ou de texte ou une date, **caractérisé en ce que** la signalisation de l'événement (E) s'effectue quand un début ou une fin d'un déplacement est identifié(e) en fonction du signal de déplacement (B).

2. Procédé selon la revendication 1, dans lequel le début du déplacement est identifié quand le signal de déplacement (B) dépasse une première valeur de seuil (TH1).

3. Procédé selon la revendication 1 ou 2, dans lequel la fin du déplacement est identifiée quand le signal de déplacement (B) va en deçà d'une deuxième valeur de seuil (TH2).

4. Procédé selon la revendication 3, dans lequel la fin du déplacement n'est identifiée que quand le signal de déplacement (B) va en deçà de la deuxième valeur de seuil (TH2) pendant au moins une durée (T) prédéterminée.

5. Procédé selon l'une des revendications précédentes, dans lequel l'événement (E) est signalisé lors de son occurrence et, quand aucune réaction d'un utilisateur du dispositif mobile (1) n'est identifiée à cette signalisation, l'occurrence de l'événement (E) est enregistrée et l'événement (E) est resignalisé, quand un début ou une fin d'un déplacement est identifié(e) en fonction du signal de déplacement (B).

6. Dispositif mobile, configuré à signaliser un événement (E) à un utilisateur du dispositif mobile en fonction d'un signal de déplacement (B) représentant un déplacement du dispositif mobile (1), l'événement (E) comprenant un coup de téléphone, un message de langue ou de texte ou une date, **caractérisé en ce que** le dispositif mobile est configuré à signaliser l'événement (E) quand le signal de déplacement (B) indique le début ou la fin du déplacement.

7. Dispositif mobile selon la revendication 6, qui est configuré comme un téléphone portable, un assistant digital personnel ou un micro-ordinateur portable.

8. Produit de programme informatique comprenant un média lisible par ordinateur avec des instructions de programme exécutables par un ordinateur et configurées à signaliser à un utilisateur du dispositif mobile (1) un événement (E) par le dispositif mobile (1) en fonction d'un signal de déplacement (B) représentant un déplacement d'un dispositif mobile (1), l'événement (E) comprenant un coup de téléphone, un message de langue ou de texte ou une date, **caractérisé en ce que** les instructions de programme sont configurées à signaliser l'événement (E) quand un début ou une fin d'un déplacement est identifié(e) en fonction du signal de déplacement (B).
